# EUROPEAN PATENT APPLICATION

(11) **EP 4 742 715 A1**
(43) Date of publication of application: **13.05.2026**
(21) Application number: 23944429.2
(22) Date of filing: 06.07.2023
(51) Int. Cl.: H04W 8/24

(54) **TERMINAL AND WIRELESS COMMUNICATION METHOD**

(71) Applicant: NTT DOCOMO, INC., Tokyo 100-6150 (JP)
(72) Inventor: ECHIGO, Haruhi, Tokyo 100-6150 (JP); SHIBAIKE, Naoya, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2023/025209
(87) International publication number: WO 2025/009182

(57) **Abstract**

According to one aspect disclosed herein, there is provided a terminal including: a control unit that generates support reporting information for reporting that a plurality of functions related to coverage expansion are supported or request information for requesting the functions; and a transmission unit that transmits the support reporting information or the request information on a single channel.

## Description

### Technical Field

The present disclosure relates to a terminal and a radio communication method.

### Background Art

The 3rd Generation Partnership Project (3GPP) has standardized a 5th generation mobile communication system (also referred to as 5G, New Radio (NR), or Next Generation (NG)), and is further standardizing a next generation system called Beyond 5G, 5G Evolution, or 6G.

For example, in 3GPP Release-17, a work item related to coverage enhancement (CE) in NR has been agreed (Non-Patent Literature (hereinafter, referred to as NPL) 1).

Specifically, a specification of PUSCH repetition scheduled based on RAR UL grant or DCI scrambled with TC-RNTI is being studied. Note that the RAR is an abbreviation for a random access response. The DCI is an abbreviation for downlink control information. The TC-RNTI is an abbreviation for a temporary cell radio network temporary identifier. PUSCH is an abbreviation for a physical uplink shared channel.

### Citation List

### Non-Patent Literature

NPL 1
   "New WID on NR Coverage Enhancements," RP-202928, 3GPP TSG RAN Meeting #90e, 3GPP, December 2020
NPL 2
   "Final Feature Lead Summary on Support of Type A PUSCH Repetitions for Msg3", R1-2106247, 3GPP TSG RAN WG1 #105-e, 3GPP, May 2021

### Summary of Invention

A system capable of coverage enhancement of 6G needs to be designed to have a higher potential for various future use cases without impairing performance.

According to an aspect of the present disclosure, there is provided a terminal including: a control section that generates support report information for reporting that the terminal supports a plurality of functions related to coverage enhancement or request information for requesting the functions; and a transmission section that transmits the support report information or the request information via one channel.

### Brief Description of Drawings

FIG. 1 is a schematic diagram illustrating a radio communication system according to an embodiment of the present disclosure;
FIG. 2 is a diagram illustrating an example of frequency ranges used in the radio communication system;
FIG. 3 is a diagram illustrating examples of configurations of a radio frame, a sub frame, and slots used in the radio communication system;
FIG. 4 is a sequence diagram illustrating a contention based random access procedure;
FIG. 5 is a sequence diagram illustrating a contention free random access procedure;
FIG. 6 is a diagram for describing repetition before and after initial connection;
FIG. 7 is a diagram illustrating an example of a TDRA table according to an embodiment of the present disclosure;
FIG. 8 is a block diagram illustrating a functional configuration of a base station (gNB) according to an example of the present disclosure;
FIG. 9 is a block diagram illustrating a functional configuration of a terminal (UE) according to an embodiment of the present disclosure;
FIG. 10 is a block diagram illustrating a hardware configuration of the base station and the terminal according to an embodiment of the present disclosure; and
FIG. 11 is a block diagram illustrating a hardware configuration of a vehicle according to an embodiment of the present disclosure.

### Description of Embodiments

Hereinafter, embodiments of the present disclosure will be described with reference to the accompanying drawings. Note that the embodiments described below are merely examples, and the embodiments to which the present disclosure is applied are not limited to the following embodiments.

Terms used in 5G New Radio (NR), such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. In addition, the above terms in NR correspond to NR-SS, NR-PSS, NR-SSS, NR-PBCH, NR-PRACH, and the like. Note that, even though the signal used in NR, it is not necessarily explicitly referred to as "NR-".

Further, in an embodiment of the present disclosure, the duplex method may be a time division duplex (TDD) method, a frequency division duplex (FDD) method, or another method (for example, a flexible duplex method), when there is no specific limitation stated.

Furthermore, in an embodiment of the present disclosure, the term "configured" with respect to a radio parameter or the like may refer to a predetermined value being preconfigured, or it may refer to a radio parameter indicated from a base station or a terminal being configured.

In addition, in the following description, the notation "/" may mean "and/or" unless otherwise specified.

### <Radio Communication System>

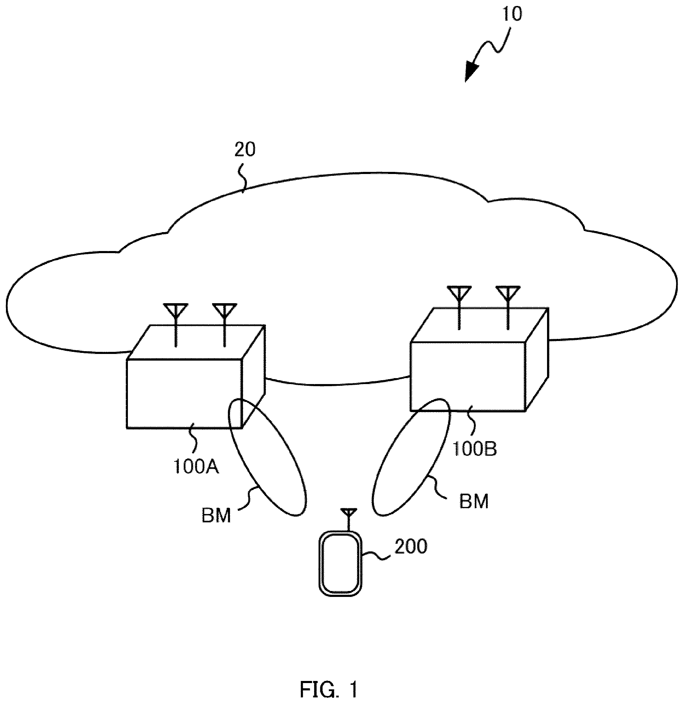

FIG. 1 is a diagram illustrating an example of radio communication system 10 according to an embodiment. Radio communication system 10 is a radio communication system conforming to 5G New Radio (NR), and includes next generation-radio access network 20 (hereinafter, NG-RAN 20) and terminal 200 (hereinafter, UE 200).

Note that radio communication system 10 may be a radio communication system conforming to a system called Beyond 5G, 5G Evolution, or 6G.

NG-RAN 20 includes base station 100A (hereinafter, gNB 100A) and base station 100B (hereinafter, gNB 100B). Note that, when there is no need to distinguish between gNB 100A, gNB 100B, and the like, they are collectively referred to as gNB 100. In addition, the number of gNBs and the number of UEs are not limited to the example illustrated in FIG. 1.

NG-RAN 20 actually includes a plurality of NG-RAN nodes, specifically, gNB (or ng-eNB), and is connected to a core network conforming to 5G (5GC, not illustrated). Note that NG-RAN 20 and 5GC may be simply expressed as a "network."

Both gNB 100A and gNB 100B are base stations conforming to 5G, and perform radio communication with UE 200 conforming to 5G. gNB 100A, gNB 100B, and UE 200 may controls radio signals transmitted from a plurality of antenna elements to handle Massive Multi Input Multi Output (MIMO) for generating a beam having a higher directivity, carrier aggregation (CA) using a plurality of component carriers (CCs) bundled together, dual connectivity (DC) for performing communication between UE and each of two NG-RAN nodes, and the like.

In addition, radio communication system 10 supports a plurality of frequency ranges (FRs).

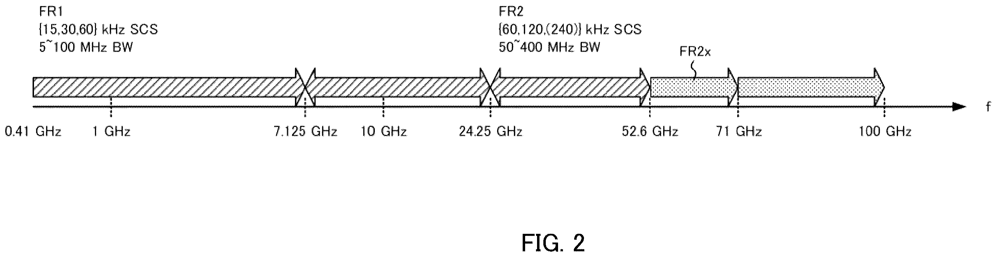

FIG. 2 is a diagram illustrating an example of frequency ranges used in radio communication system 10. As illustrated in FIG. 2, radio communication system 10 supports FR1 and FR2. The frequency bands of each FR are, for example, as follows.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and SCS of 60 kHz or 120 kHz (240 kHz may be included) may be used, and a bandwidth (BW) of 50 to 400 MHz may be used.

Note that, the sub-carrier spacing (SCS) may be interpreted as numerology. The numerology is defined in 3GPP TS 38.300 and corresponds to one subcarrier spacing in a frequency domain.

Further, radio communication system 10 may support a frequency band higher than the frequency band of the FR2. Specifically, radio communication system 10 may support a frequency band of above 52.6 GHz to 114.25 GHz. Such a high frequency band may be referred to as "FR2x" for convenience. In a case where a band above 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having a larger SCS may be applied.

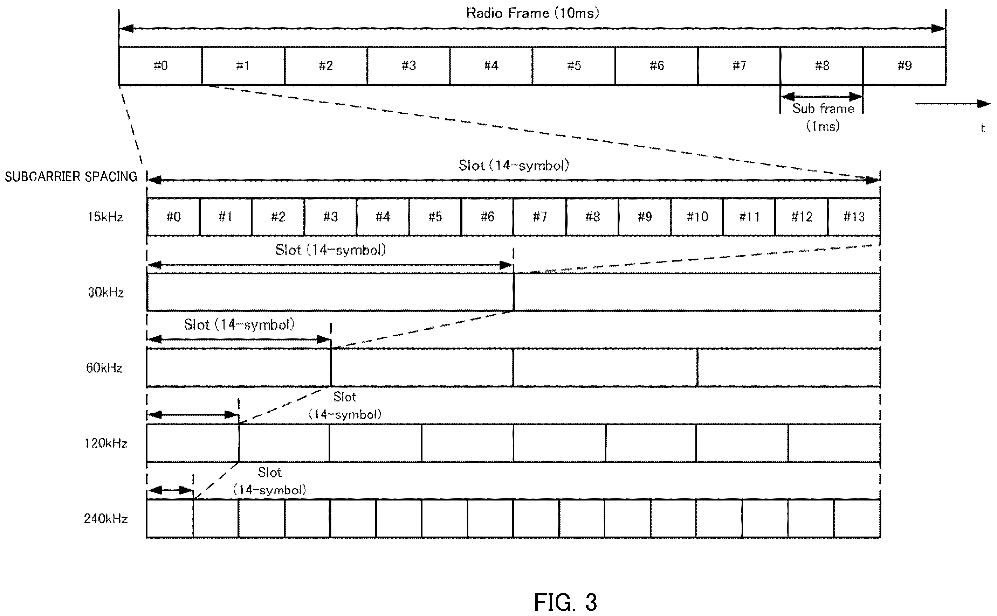

FIG. 3 is a diagram illustrating examples of configurations of a radio frame, a sub frame, and slots used in radio communication system 10. As illustrated in FIG. 3, one slot is composed of 14-symbols, and the larger (wider) the SCS, the shorter the symbol duration (and slot period). The SCS is not limited to the spacing (frequency) illustrated in FIG. 3. For example, 480 kHz, 960 kHz, or the like may be used as the SCS.

Further, the number of symbols constituting one slot may not necessarily be 14-symbols (for example, 28 or 56 symbols). Further, the number of slots per sub frame may be different depending on the SCS.

Note that the time direction (t) illustrated in FIG. 3 may be referred to as a time domain, a symbol duration, a symbol time, or the like. In addition, a frequency direction may be referred to as a frequency region, a resource block, a subcarrier, a bandwidth part (BWP), or the like.

A demodulation reference signal (DMRS) is a type of reference signal and is prepared for various channels. Here, unless otherwise specified, it may mean a DMRS for a downlink data channel (specifically, a physical downlink shared channel (PDSCH)). Note that a DMRS for an uplink data channel (specifically, a physical uplink shared channel (PUSCH)) may be interpreted to be the same as the DMRS for the PDSCH.

The DMRS may be used for channel estimation in a device (for example, UE 200) as a part of coherent demodulation. The DMRS may be present only in a resource block (RB) used for PDSCH transmission.

The DMRS may have a plurality of mapping types. Specifically, the DMRS may have mapping type A and mapping type B. In mapping type A, the first DMRS may be mapped in the second or third symbol of a slot. In mapping type A, the DMRS may be mapped based on a slot boundary, regardless of where actual data transmission is started in the slot. The reason why the first DMRS is mapped in the second or third symbol of a slot may be interpreted as to map the first DMRS after control resource sets (CORESETs).

In mapping type B, the first DMRS may be mapped in the first symbol of data assignment. That is, a position of the DMRS may be relatively given with respect to a location where data is mapped, instead of the slot boundary.

In addition, the DMRS may have a plurality of types. Specifically, DMRS may have Type 1 and Type 2. Type 1 and Type 2 differ in the mapping in a frequency domain and in the maximum number of orthogonal reference signals. Type 1 is a single-symbol DMRS and can output a maximum of four orthogonal signals, and Type 2 is a double-symbol DMRS and can output a maximum of eight orthogonal signals.

Radio communication system 10 may support coverage enhancement (CE) for expanding coverage of a cell (or may also be a physical channel) formed by gNB 100. In the coverage enhancement, a mechanism for improving a reception success rate of various physical channels, such as Msg3 repetition, may be provided.

For example, UE 200 receives information related to a RACH procedure from gNB 100 as a DL signal. In addition, for example, UE 200 receives information related to Msg3 repetition from gNB 100 as a DL signal. The information related to Msg3 repetition may include, for example, information indicating a resource used for the repetition of Msg3, the number of repetitions, a frequency hopping pattern, a designated offset used in frequency hopping, and the like.

For example, UE 200 transmits a special RACH occasion (RO) or a preamble for requesting Msg3 repetition in the RACH procedure to gNB 100 as a UL signal. In addition, for example, UE 200 repeatedly transmits Msg3 to gNB 100 based on the information related to Msg3 repetition received from gNB 100 in response to the request for Msg3 repetition, as UL signals.

The UL signal may include, for example, a UL data signal and control information. For example, the UL signal may include information related to processing capability of UE 200 (for example, UE capability). In addition, the UL signal may include a reference signal.

A channel used for UL signal transmission includes, for example, a data channel and a control channel. For example, the data channel may include a PUSCH, and the control channel may include a physical uplink control channel (PUCCH). For example, UE 200 transmits control information using the PUCCH and transmits a UL data signal using the PUSCH. Note that the PUSCH is an example of an uplink shared channel, and the PUCCH is an example of an uplink control channel. The shared channel may also be referred to as a data channel.

A reference signal included in the UL signal may include, for example, at least one of a DMRS, a phase tracking reference signal (PTRS), a channel state information-reference signal (CSI-RS), a sounding reference signal (SRS), or a positioning reference signal (PRS) for position information. For example, reference signals such as the DMRS and PTRS are used for demodulating a UL data signal and are transmitted using the PUSCH.

The RACH procedure of NR is performed for initial access from RRC_Idle, radio resource control (RRC) connection (re)establishment, recovery from beam failure, handover, arrival of downlink data, arrival of uplink data, positioning, timing alignment (TA), and the like. The RACH procedure includes a contention based random access (CBRA) procedure as a contention type random access procedure and a contention free random access (CFRA) procedure as a non-contention type random access procedure. Since the CBRA procedure is initiated by UE 200 voluntarily, a contention may occur when a plurality of UEs 200 simultaneously initiate the RACH procedure. Meanwhile, in the CFRA, gNB 100 can have a plurality of UEs 200 perform the RACH procedure without a contention between the plurality of UEs 200 by giving indications to connected UEs 200.

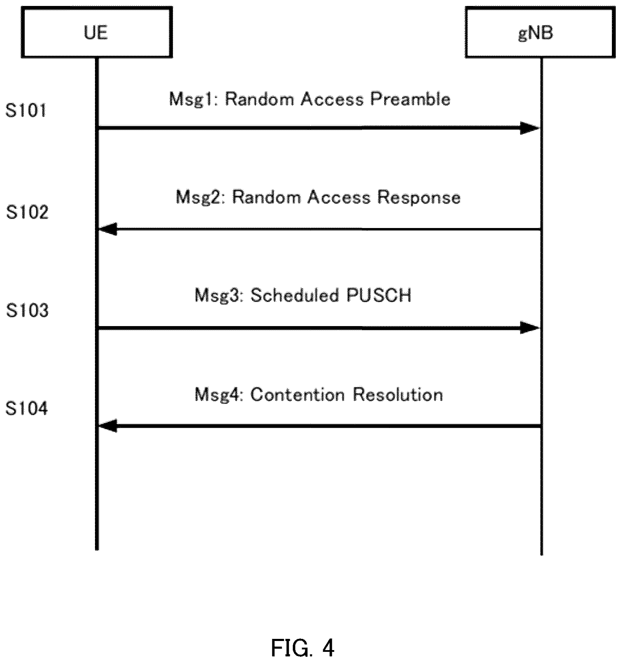

FIG. 4 is a sequence diagram illustrating the CBRA procedure. As illustrated in FIG. 4, in step S101, UE 200 transmits a random access preamble (RA preamble) as the first message (Msg1) via a physical random access channel (PRACH).

In step S102, UE 200 receives a response message (random access response (RAR)) to Msg1 via a PDSCH as the second message (Msg2). After transmitting Msg1, UE 200 may monitor a PDCCH used for scheduling the PDSCH including Msg2. A CRC bit included in the PDCCH may be scrambled with a random access-radio network temporary identifier (RA-RNTI). Msg2 may include an uplink grant (RAR UL grant) used for scheduling a PUSCH including Msg3. The RAR UL grant may include a temporary cell-RNTI (TC-RNTI). The RAR UL grant may include a TPC command indicating a correction value for a power control adjustment value used for transmit power of the PUSCH including Msg3.

In step S103, UE 200 transmits the PUSCH scheduled by the RAR UL grant as the third message (Msg3). For example, UE 200 transmits an RRC connection request, an RRC connection reestablishment request, and the like to gNB 100 via the PUSCH. Msg3 may be referred to as an RRC connection request. Note that UE 200 may repeatedly transmit the PUSCH of Msg3 for coverage enhancement.

In step S104, UE 200 receives a contention resolution message via a PDCCH as the fourth message (Msg4). After transmitting Msg3, UE 200 may monitor the PDCCH used for scheduling a PDSCH including Msg4. Msg4 may include a contention resolution ID (UE contention resolution ID). The contention resolution ID may be used to resolve a contention caused by a plurality of UEs 200 transmitting signals using the same radio resource. In a case where the contention resolution ID included in Msg4 received by UE 200 is the same value as the ID for identifying UE 200, UE 200 may determine that the contention resolution has succeeded and set a value of a TC-RNTI in a C-RNTI field. When the value of a TC-RNTI is set in the C-RNTI field, UE 200 may determine that RRC connection is completed. Msg4 may be referred to as an RRC connection setup.

UE 200 whose RRC connection is completed may transmit Ack via a PUCCH (PUCCH resource) indicated by a PUCCH resource indication field included in the PDCCH in which Msg4 is scheduled, to indicate the completion of the RRC connection to gNB 100. In addition, after the RRC connection is established, UE 200 transmits the capability to gNB 100. The RACH procedure described above may be referred to as a Type 1 RACH procedure, a 4-step RACH procedure, a Type 1 RACH, a 4-step RACH, and the like. In addition, the capability is information indicating whether each function is supported, and may be referred to as UE capability, information related to processing capability, capability information, and the like.

Note that Msg3 may be referred to as an uplink signal or the second uplink signal. In addition, Msg1 may be referred to as the first uplink signal. Further, Msg4 may be referred to as a downlink signal or the second downlink signal. Furthermore, Msg2 may be referred to as the first downlink signal.

In addition, for example, UE 200 may control a RACH procedure consisting of the first step in which step S101 and step S103 described above are combined and the second step in which step S102 and step S104 described above are combined. The RACH procedure may be referred to as a Type 2 RACH procedure, a 2-step RACH procedure, a Type 2 RACH, a 2-step RACH, and the like. Further, a message obtained by combining Msg1 and Msg3 described above in the first step of the RACH procedure may be referred to as MsgA, and a message obtained by combining Msg2 and Msg4 described above in the second step may be referred to as MsgB.

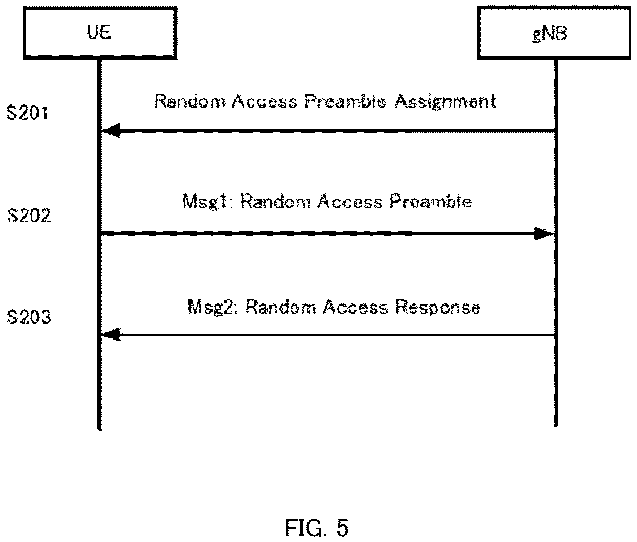

FIG. 5 is a sequence diagram illustrating the CFRA procedure. As illustrated in FIG. 5, in step S201, UE 200 is requested to transmit an RA preamble (Msg1) from gNB 100. gNB 100 may assign the RA preamble (Msg1) via dedicated signaling. The PDCCH for such dedicated signaling may be referred to as a PDCCH order. UE 200 monitors the PDCCH (PDCCH order) for executing resource assignment for Msg1.

In step S202, UE 200 transmits Msg1 described above.

In step S203, UE 200 receives Msg2 described above. UE 200 whose RRC connection is completed may transmit Ack via a PUCCH (PUCCH resource) to indicate the completion of the RRC connection to gNB 100. In addition, after the RRC connection is established, UE 200 transmits a parameter indicating the capability to gNB 100 to indicate whether it supports the repetition of Msg3.

Note that a channel used for DL signal transmission and a channel used for UL signal transmission are not limited to the above examples. For example, the channel used for DL signal transmission and the channel used for UL signal transmission may include a RACH and a physical broadcast channel (PBCH). The RACH may be used, for example, for transmitting DCI including a random access radio network temporary identifier (RA-RNTI).

A plurality of types of PUSCH repetition may be defined. Specifically, repetition Type A and repetition Type B may be defined.

Repetition Type A may be interpreted as a form in which a PUSCH assigned in a slot is repeatedly transmitted. That is, the PUSCH is 14 symbols or less and is not likely to be assigned across a plurality of slots (adjacent slots). Note that PUSCH repetition Type A may be referred to as repetition Type A, PUSCH Type A repetition, Type A repetition, mapping Type A, data mapping Type A, Type A, and the like.

In contrast, repetition type B may be interpreted as PUSCH repetition in which a PUSCH of 15 symbols or more is likely to be assigned. In the present embodiment, such PUSCH may be allowed to be assigned across a plurality of slots. Note that PUSCH repetition Type B may be referred to as repetition Type B, PUSCH Type B repetition, Type B repetition, mapping Type B, data mapping Type B, Type B, and the like.

In addition, in radio communication system 10, a plurality of types of terminals (UEs) 200 that are different in function, performance, or the like or that support different 3GPP Releases may be used. The type may be replaced with another term such as a generation or a Release. For example, the first-type terminal that supports a coverage enhancement function and the second-type terminal that does not support the coverage enhancement function, such as an enhanced mobile broadband (eMBB) terminal of Release-15, may be present in the same cell. The first-type terminal and the second-type terminal may be referred to as enhanced UE and legacy UE, respectively.

### <Expandable System>

A 6G system (expandable system) needs to be designed to have a higher potential for various future use cases without impairing performance.

As a problem of NR, as described in the following examples, functions in future releases cannot achieve the maximum advantage for the actual network due to initial functions of NR.

### (Example 1: Minimum Bandwidth Required for Cell Connection of NR)

A bandwidth of an NR SSB is a bottleneck for bandwidth reduction of a low-end IoT (eRedCap) device.

### (Example 2: Delayed Introduction of Some Cell Coverage Enhancement Functions)

Since it is not realistic to modify cell deployment in a short period, coverage enhancement functions supported in future releases will bring only marginal benefits to the coverage of a cell in the actual field.

### (Suggested Directions)

A common signal/channel (SSB or the like) is designed to be available to more types of UEs.

Early support for more effective functions is provided in an initial stage.

### <Agreement/Study of Repetition Before and After Initial Connection>

For the support for the repetition of an uplink physical channel before and after the initial connection, which is one of the coverage enhancement functions, some have already been agreed in Release-17, and others are studied in Release-18 and beyond. By UE 200 performing the repetition of an uplink physical channel, a reception success rate of the physical channel in gNB 100 can be improved, thereby realizing the coverage enhancement of the cell.

### (Agreement in Release-17)

In Release-17, it is agreed to support Msg3 PUSCH repetition in the CBRA procedure and to support PUSCH repetition in the CFRA procedure. That is, it is agreed to support the repetition of a PUSCH scheduled by an RAR UL grant, which includes both the Msg3 PUSCH in the CBRA procedure and the PUSCH in the CFRA procedure.

### (Study Item in Release-18 and beyond)

In Release-17, in order to provide a 5G service even in a region that cannot be covered by a terrestrial mobile network, a specification of a non-terrestrial network (NTN) in which a terrestrial 5G system is complemented or expanded with a satellite network has been specified. In an NR NTN of Release-18, repetition of Msg4 HARQ-ACK is studied to be supported.

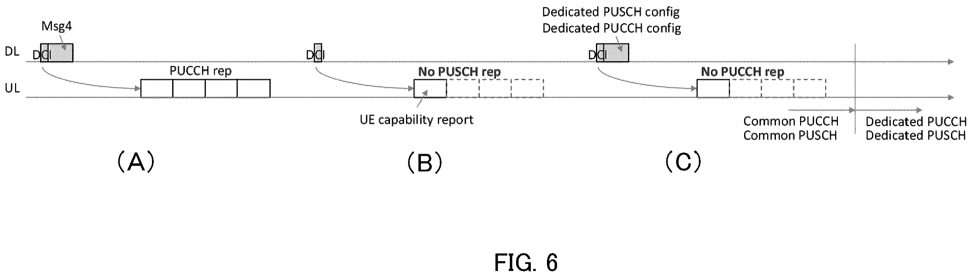

In this case, as illustrated in (A) of FIG. 6, UE 200 monitors a PDCCH used for scheduling a PDSCH including Msg4 after transmitting Msg3, and decodes the PDCCH (for example, DCI 1_0) and the PDSCH. Upon successful decoding of Msg4, UE 200 transmits HARQ-ACK for the data (the PDSCH that carries Msg4) (hereinafter, referred to as "Msg4 HARQ-ACK") via a PUCCH scheduled by DCI. In this case, UE 200 repeatedly transmits the HARQ-ACK (PUCCH repetition) according to the number of repetitions indicated by the DCI.

In addition, in the coverage enhancement of Release-18, PRACH repetition for repeatedly transmitting an RA preamble (Msg1) is studied to be supported.

In the current situation, as illustrated in (B) of FIG. 6, in a stage (common PUSCH) before receiving a dedicated PUSCH configuration (Msg5 PUSCH) after transmitting the Msg3 PUSCH, UE 200 does not perform PUSCH repetition and transmits a signal such as a UE capability report in a single PUSCH scheduled by the DCI.

Further, in the current situation, as illustrated in (C) of FIG. 6, in a stage (common PUCCH) before receiving a dedicated PUCCH configuration (Msg5 PUCCH) after transmitting the Msg4 HARQ-ACK, UE 200 does not perform PUCCH repetition and transmits HARQ-ACK in a single PUCCH scheduled by the DCI.

In Release-18 technical enhancement or important (TEI) and Release-19, repetition of the common PUSCH after transmitting the Msg3 PUSCH and repetition of the common PUCCH after transmitting the Msg4 HARQ-ACK have been suggested.

### <Capability Related to Repetition>

In 5G NR, it is mandatory for UE 200 to report, to gNB 100, a parameter (for example, pusch-RepetitionMultiSlots) indicating a capability of whether to support the PUSCH repetition scheduled by DCI format 0_1 when the number of repetitions is configured by an RRC parameter. Note that in the present disclosure, "report" may be replaced with "indicate" or "transmit".

Note that, in 5G NR, it is optional for UE 200 to report, to gNB 100, a parameter (for example, pusch-RepetitionMsg3-r17) indicating a capability of whether to support the PUSCH (Msg3) repetition scheduled by an RAR UL grant or DCI format 0_0.

In addition, in 5G NR, it is optional for UE 200 to report, to gNB 100, a parameter (for example, pusch-RepetitionTypeA-r16) indicating a capability for a dynamic indication of the number of repetitions of PUSCH transmission.

Note that the PUSCH repetition based on a dynamic indication of the number of repetitions may have become an optional function since it is supported in a subsequent release (Release-16), but it may become mandatory in 6G due to its ease of implementation.

### <Replacement of Terms>

The terms used in the present embodiment may be replaced as follows.
- The Msg2 PDCCH may be replaced with DCI format 1_0 with CRC scrambled by RA-RNTI.
- The Msg2 PDSCH may be replaced with a PDSCH including an RAR message.
- The Msg3 PUSCH may be replaced with a PUSCH scheduled by an RAR UL grant or DCI format 0_0 with CRC scrambled by TC-RNTI.
- The Msg4 PDSCH may be replaced with a PDSCH scheduled by DCI format 1_0 with CRC scrambled by TC-RNTI.
- The Msg4 PUCCH may be replaced with a PUCCH including HARQ-ACK/NACK info corresponding to a PDSCH scheduled by DCI format 1_0 with CRC scrambled by TC-RNTI.
- The common PUSCH may be replaced with a PUSCH scheduled by DCI format 0_0 with CRC scrambled by C-RNTI.
- The common PDSCH may be replaced with a PDSCH scheduled by DCI format 1_0 with CRC scrambled by C-RNTI.
- The common PUCCH may be replaced with a PUCCH including HARQ-ACK/NACK info corresponding to a PDSCH scheduled by DCI format 1_0 with CRC scrambled by C-RNTI.
- The common PDCCH with TC-RNTI may be replaced with DCI format 0_0 with CRC scrambled by TC-RNTI.
- The common PDCCH with MsgB-RNTI may be replaced with DCI format 0_0 with CRC scrambled by MsgB-RNTI.
- The common PDCCH with C-RNTI may be replaced with DCI format 0_0/1_0 with CRC scrambled by C-RNTI.
- The dedicated PUSCH may be replaced with a PUSCH scheduled by DCI format 0_1 with CRC scrambled by C-RNTI/MCS-C-RNTI/CS-RNTI.
- The dedicated PDSCH may be replaced with a PDSCH scheduled by DCI format 1_1 with CRC scrambled by C-RNTI/MCS-C-RNTI/CS-RNTI.
- The dedicated PUCCH may be replaced with a PUCCH including HARQ-ACK/NACK info corresponding to PDSCH scheduled by DCI format 1_1 with CRC scrambled by C-RNTI/MCS-C-RNTI/CS-RNTI.
- The dedicated PDCCH may be replaced with DCI format 0_1/1_1 with CRC scrambled by C-RNTI/MCS-C-RNTI.

The present embodiment will be described using the expressions at the left end for the above terms for simplicity of expression. Note that the expressions other than ones at the left end for the terms are the expressions used in the RAN1 spec (TS38.211-TS38.214).

Note that the DCI formats described above are merely examples, and there is no limitation for the DCI format in the present embodiment. For example, DCI format 0_0 may be DCI format 0_2/1_2, 0_3/1_3, a new DCI format, or the like.

In addition, the RNTIs described above are merely examples, and there is no limitation for the RNTI in the present embodiment. For example, the C-RNTI/MCS-C-RNTI/CS-RNTI above indicates that the RNTI may be any of C-RNTI, MCS-C-RNTI, and CS-RNTI.

### <Study>

As described above, in 5G NR and 6G, the support for the coverage enhancement function has been agreed or studied. It is specified for each UE 200 to have a capability indicating whether to support the coverage enhancement function (particularly, a function related to repetition).

The inventors of the present disclosure have found the following problems to be studied regarding the support for the coverage enhancement function and the capability for the coverage enhancement function of UE 200.

### <Problem 1 to be Studied>

The function (capability) related to repetition is broken down and complicated, such as whether to support PUSCH repetition in each of the channels of a PRACH, Msg3, and Msg5. That is, the capability related to repetition is specified for each of "(A) expression of the number of repetitions/number of slots", "(B) candidate channel", and "(C) transmission across a plurality of transmission units". When UE 200 reports the capability for each category to gNB 100, the overhead of capability signaling is increased.

### <Problem 2 to be Studied>

In a case where both the enhanced UE that supports the coverage enhancement function and the legacy UE that does not support the coverage enhancement function are present in a cell, the cell design needs to be performed assuming the legacy UE, which reduces a coverage enhancement gain of the cell.

### <Problem 3 to be Studied>

In 5G NR Release-17, it is agreed to support UE 200 in requesting repetition. In addition, it is discussed that UE 200 reports (indicates) that it supports repetition. However, in a case where UE 200 transmits information indicating that it supports the coverage enhancement function (particularly, the function related to repetition) or information for requesting the coverage enhancement function for each channel, the overhead is increased due to the increased number of times of signaling or the larger payload size of signaling.

The inventors of the present disclosure have studied solutions to the above-described problems and have thereby arrived at the present disclosure. Hereinafter, suggestions for solving respective problems will be described.

### <Suggestion 1>

First, Suggestion 1 for solving the above Problem 1 to be studied will be described.

As the capability related to the coverage enhancement function, each capability of (A) expression of the number of repetitions/number of slots, (B) candidate channel, and (C) transmission across a plurality of transmission units may be specified for UE 200. Hereinafter, each capability of (A) to (C) will be described.

### <(A) Expression of the Number of Repetitions/Number of Slots>

Examples of the expression of the number of repetitions/number of slots include (A1) dynamic repetition indication, (A2) RRC configuration-based indication, (A3) no indication, and the like. Note that the "expression of the number of repetitions/number of slots" may be replaced with a "form of indication of the number of repetitions/number of slots".

### (A1. Dynamic Repetition Indication)

Examples of the dynamic repetition indication, that is, a dynamic indication of the number of repetitions/number of slots by DCI include an indication of the number of repetitions/number of slots by a TDRA or a PUCCH resource, wherein the number of repetitions/number of slots is associated with a value (row index) in a row of the TDRA table or with an indicator field of the PUCCH resource.

Each UE 200 is specified to have a capability for the dynamic repetition indication. UE 200 that supports the dynamic repetition indication determines the number of repetitions/number of slots in accordance with the indicated row index of the TDRA or the indicator field of the PUCCH resource.

gNB 100 may indicate the number of repetitions/number of slots to UE 200 that supports the dynamic repetition indication by associating the number of repetitions/number of slots with the TDRA or the PUCCH resource. In contrast, to UE 200 that does not support the dynamic repetition indication, gNB 100 dynamically indicates the number of repetitions/number of slots using another method without associating the number of repetitions/number of slots with the TDRA or the PUCCH resource, or does not dynamically indicate the number of repetitions/number of slots.

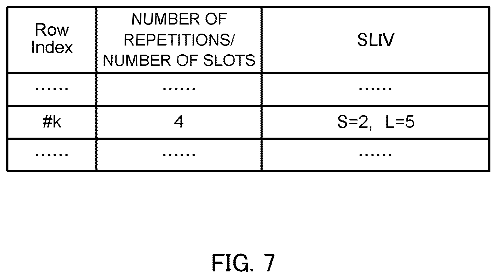

FIG. 7 is a diagram illustrating an example of the TDRA table according to the present suggestion. The number of repetitions/number of slots is associated with a row index of the TDRA table. UE 200 configures the number of repetitions/number of slots corresponding to the indicated row index of the TDRA table. For example, in the example of FIG. 7, in a case where Row Index (#k) is indicated, UE 200 configures the number of repetitions/number of slots to "4".

### (A2. RRC Configuration-Based Indication)

Examples of the RRC configuration-based indication, that is, a quasi-static indication of the number of repetitions/number of slots include an indication of the number of repetitions/number of slots by an RRC parameter.

Each UE 200 is specified to have a capability for the RRC configuration-based indication. UE 200 that supports the RRC configuration-based indication determines the number of repetitions/number of slots based on the RRC parameter transmitted from gNB 100. Note that UE 200 that supports the RRC configuration-based indication may uniquely determine the number of repetitions/number of slots by the RRC parameter, or may determine the number of repetitions in accordance with a DL reception result (a comparison result between a reception level and a threshold) or the like. For example, in a case where the reception level is lower than the threshold, UE 200 configures the number of repetitions/number of slots indicated by the RRC parameter, and in a case where the reception level is higher than the threshold, UE 200 configures the number of repetitions/number of slots to "1" and does not perform repetition.

gNB 100 may indicate the number of repetitions/number of slots to UE 200 that supports the RRC configuration-based indication by the RRC parameter. In contrast, gNB 100 does not indicate the number of repetitions/number of slots by the RRC parameter to UE 200 that does not support the RRC configuration-based indication.

### (A3. No Indication)

Each UE 200 is specified to have a capability for no indication (processing of determining the number of repetitions/number of slots without an indication from gNB 100). UE 200 that supports no indication determines the number of repetitions/number of slots in accordance with, for example, a predetermined specification. In this case, UE 200 may determine the number of repetitions/number of slots in accordance with a DL reception result (a comparison result between a reception level and a threshold) or the like. For example, in a case where the reception level is lower than the threshold, UE 200 configures the number of repetitions/number of slots determined by the specification, and in a case where the reception level is higher than the threshold, UE 200 configures the number of repetitions/number of slots to "1" and does not perform repetition.

gNB 100 need not indicate the number of repetitions/number of slots to UE 200 that supports no indication. In contrast, gNB 100 indicates the number of repetitions/number of slots to UE 200 that does not support no indication.

### <(B) Candidate Channel>

The candidate channel for repetition includes a PRACH, a MsgA PRACH, a Msg2 PDCCH, a Msg2 PDSCH, a Msg3 PUSCH, a MsgA PUSCH, a Msg4 PDSCH, a MsgB PDCCH, a MsgB PDSCH, a Msg4 PUCCH, a common PUSCH, a common PDSCH, a common PUCCH, a common PDCCH with TC-RNTI, a common PDCCH with C-RNTI, a dedicated PUSCH, a dedicated PDSCH, a dedicated PUCCH, a dedicated PDCCH, and the like.

The capability is configured for each candidate channel. In "Bundling of Capabilities" described below, UE 200 may bundle the capabilities for the channels for performing repetition selected from the candidate channels as a single capability. For example, UE 200 may report the capability of repetition for a plurality of candidate channels in one parameter, such as PUSCH transmission (all PUSCH channels), PUCCH transmission (all PUCCH channels), a PUSCH scheduled by DCI format 0_0, or a PDSCH scheduled by DCI format 1_0.

### <(C) Transmission across a Plurality of Transmission Units>

Each UE 200 is specified to have a capability for each form of transmission across a plurality of transmission units, such as repetition. Examples of the transmission unit include a slot, a sub slot, a symbol, and the like.

For example, UE 200 may have a function of mapping the same data to each of the PUSCHs assigned to a plurality of slots and repeatedly transmitting the same data or a function of transmitting one transport block (TB) using a plurality of slots. In this case, transmission/reception symbols are mapped to the same symbol position in respective slots to which the PUSCH resources are assigned. Examples of the form of transmission include PUSCH repetition Type A, TB processing over multi-slot transmission, repetition for PUCCH over multiple slots, and the like.

In addition, for example, UE 200 may have a function of mapping the same data to each of the PUSCHs assigned to a plurality of sub slots/symbols and repeatedly transmitting the same data or a function of transmitting one TB using a plurality of sub slots/symbols. Examples of the form of transmission include PUSCH repetition Type B, repetition for PUCCH over multiple PUCCH sub slots, and the like.

### <Bundling of Capabilities>

As described above, the capability of repetition is specified for each of "(A) expression of the number of repetitions/number of slots", "(B) candidate channel", and "(C) transmission across a plurality of transmission units".

UE 200 may bundle capabilities of (A) to (C) to generate one parameter (hereinafter, referred to as a "bundling parameter") indicating the capabilities. That is, UE 200 may generate one bundling parameter indicating a capability of at least one "(C) transmission across a plurality of transmission units" for at least one "(B) candidate channel" based on at least one "(A) expression of the number of repetitions/number of slots" and report the bundling parameter to gNB 100 (network).

A timing at which UE 200 reports the bundling parameter to gNB 100 may be after the initial connection is completed. Note that UE 200 may also report a capability related to a channel used during the initial connection, such as a PRACH, to gNB 100 after the initial connection is completed. gNB 100 can refer to the capability related to the channel used during the initial connection when performing a handover.

### <Effect of Suggestion 1>

As described above, UE 200 generates the bundling parameter and reports the bundling parameter to gNB 100, which makes it possible to reduce the capability signaling as compared with a case where UE 200 reports a parameter indicating each capability for each capability to gNB 100, thereby reducing the overhead.

### <Variation of Suggestion 1>

UE 200 may also include a capability described in each of the following options in the bundling parameter described above and report the bundling parameter to gNB 100.

### (Option 1)

Each UE 200 may be specified to have a capability for one or more multi-transmission and reception point (TRP) PUSCH repetition schemes (schemes for repeatedly transmitting PUSCHs associated with different spatial relations, UL TCI-states, joint TCI-states, or power control parameter sets in TDD). The above scheme includes multi-TRP PUSCH repetition based on codebook with PUSCH repetition Type A/B, multi-TRP PUSCH repetition for non-codebook based PUSCH repetition Type A/B, and the like.

Note that, in a case where UE 200 includes the above capability in the bundling parameter, UE 200 may further include a capability for the support for sequential mapping and/or cyclic mapping in the bundling parameter.

### (Option 2)

Each UE 200 may be specified to have a capability for one or more multi-TRP PUCCH repetition schemes (schemes for repeatedly transmitting PUCCHs associated with different spatial relations, UL TCI-states, joint TCI-states, or power control parameter sets in TDD). The above scheme includes PUCCH repetition scheme 1, PUCCH repetition scheme 3, and the like.

Note that, in a case where UE 200 includes the above capability in the bundling parameter, UE 200 may further include a capability for the support for sequential mapping and/or cyclic mapping in the bundling parameter.

### (Option 3)

Each UE 200 may be specified to have a capability for one or more frequency hopping schemes. The above scheme includes inter-subslot frequency hopping for a PUCCH, inter-slot frequency hopping for a PUCCH, enhanced inter-slot frequency hopping for DMRS bundling for a PUCCH, inter-slot frequency hopping for a PUSCH, intra-slot frequency hopping for a PUSCH, enhanced inter-slot frequency hopping for DMRS bundling for a PUSCH, and the like.

### (Option 4)

Each UE 200 may be specified to have a capability for DMRS bundling for each candidate channel described in the section "(B) Candidate Channel" of Suggestion 1.

Note that, among the capabilities described in Options 1 to 4, the capability to be included in the bundling parameter may be fixedly determined by the specification or may be dynamically determined depending on the type of UE 200 or the like.

### <Suggestion 2>

Next, Suggestion 2 for solving the above Problem 2 to be studied will be described.

### <Suggestion 2-1>

It may be mandatory for UE 200 to always support a function (coverage enhancement function) corresponding to each capability described in the above Suggestion 1 or each capability described in Suggestion 1 and its variation.

UE 200 may report a parameter indicating a capability for supporting the mandatory function to gNB 100 (mandatory with signaling) or may not report the parameter (mandatory without signaling).

### <Suggestion 2-2>

In a case where a specific condition is satisfied, it may be mandatory (conditional mandatory) for UE 200 to support a function (coverage enhancement function) corresponding to each capability described in the above Suggestion 1 or each capability described in Suggestion 1 and its variation.

UE 200 may report a parameter indicating a capability for supporting the conditional mandatory function to gNB 100 (conditional mandatory with signaling) or may not report the parameter (conditional mandatory without signaling).

The "specific condition" may include, for example, the following.
- UE 200 supports a function corresponding to a specific capability
- UE 200 supports communication at a specific frequency (for example, a specific band or a specific FR)
- UE 200 is of a specific UE type (for example, RedCap UE)
- UE 200 has performed the initial connection using a specific PRACH
- UE 200 supports a release of NR Rel-XX or later

### <Effect of Suggestion 2>

As described above, by mandating the support for the coverage enhancement function in each UE, all UEs present in a cell are enhanced UEs that support the coverage enhancement function.

Therefore, it is possible to perform cell design assuming the enhanced UE, and the radio communication system (6G system) can obtain the coverage enhancement gain of the cell.

gNB 100 can communicate with all the enhanced UEs 200 present in an expanded coverage range.

Note that the legacy UE that does not support the coverage enhancement function cannot perform communication in the 6G system and can perform only communication in the legacy system.

### <Suggestion 3>

Next, Suggestion 3 for solving the above Problem 3 to be studied will be described.

### <Suggestion 3-1>

As described in Suggestion 1, the coverage enhancement function (particularly, the function related to repetition) is broken down for each channel. UE 200 transmits, via a single channel, information indicating the support for, or requesting, a plurality of functions related to repetition described in the above Suggestion 1, that is, the function of at least one "(C) transmission across a plurality of transmission units" for at least one "(B) candidate channel" based on at least one "(A) expression of the number of repetitions/number of slots".

Note that, in the following, "reporting support for, or requesting the function related to repetition" will be referred to as "reporting support/requesting". In addition, "information for reporting support for the function related to repetition, or information for requesting the function" will be referred to as "information for support report/request".

Hereinafter, options for a method of transmitting the information for support report/request will be each described.

### (Option 1)

UE 200 transmits a PRACH including the information for support report/request in a specific PRACH resource (PRACH preamble and/or RACH occasion).

For example, a PRACH resource can be configured for the support report/request as one of feature combinations, and UE 200 may perform the support report/request by transmitting the PRACH resource associated with the feature combination.

### (Option 2)

UE 200 transmits the information for support report/request via a Msg3/MsgA PUSCH.

For example, the information for support report/request may be included in higher layer signaling transmitted by the Msg3 PUSCH.

### <Suggestion 3-2>

UE 200 may report the support for/request the function (capability) described in the variation of Suggestion 1 to gNB 100 based on each option of the above Suggestion 3-1.

In this case, UE 200 may report the support for/request the function (capability) described in the variation of Suggestion 1 using the same signal (channel) as that described in each option of the above Suggestion 3-1. For example, the support report/request of repetition and DMRS bundling may be configured as one of the feature combinations.

### <Suggestion 3-3>

UE 200 may determine whether to perform the support report/request described in the above Suggestions 3-1/3-2 as in each of the following options.

### (Option 1)

UE 200 may determine whether to perform the support report/request based on whether a reception level such as reference signal received power (RSRP) of DL/PL/RS is higher than or lower than a threshold. For example, UE 200 performs the support report/request in a case where the RSRP is lower than the threshold, and does not perform the support report/request in a case where the RSRP is higher than the threshold. Note that the threshold may be configured to be a value predetermined in the specification, or may be determined by UE 200 based on information (for example, SIB1) received from gNB 100 (network).

In determining whether to perform the support report/request for a plurality of candidate channels, the threshold may be configured/determined as follows.

### (Alt1)

The threshold may be a value associated with a set of the plurality of candidate channels. For example, UE 200 may configure a threshold for a case of requesting a Msg3 PUSCH and a Msg4 PUCCH.

### (Alt2)

The threshold may be a minimum value or a maximum value of the threshold associated with each candidate channel of a plurality of candidate channels. For example, UE 200 may configure a minimum value of a threshold for whether to request a Msg3 PUSCH and a threshold for whether to request a Msg4 PUCCH as the threshold for a case of requesting the Msg3 PUSCH and the Msg4 PUCCH.

Similarly, in a case of collectively reporting support for/requesting a plurality of functions of "(C) transmission across a plurality of transmission units" or the functions described in the variation of Suggestion 1, the threshold may be configured/determined as in each of the following sub-options.

### (Sub-Option 1)

The threshold may be a value associated with a set of a plurality of functions. For example, UE 200 may configure a threshold for a case of requesting both a function of "(C) transmission across a plurality of transmission units" and a function described in the variation of Suggestion 1.

### (Sub-Option 2)

The threshold may be a minimum value or a maximum value of a threshold associated with each function. For example, UE 200 may configure a minimum value of a threshold for whether to request the function of "(C) transmission across a plurality of transmission units" and a threshold for whether to request the function described in the variation of Suggestion 1 as the threshold for a case of requesting both the function of "(C) transmission across a plurality of transmission units" and the function described in the variation of Suggestion 1.

### (Option 2)

UE 200 may determine whether to perform the support report/request based on whether each function is supported. For example, in a case of supporting a target function, UE 200 always performs the support report/request.

### (Option 3)

UE 200 may determine whether to perform the support report/request based on whether a configuration/indication to perform the support report/request is received from the network.

### (Option 4)

UE 200 may configure/determine a threshold of a reception level such as RSRP or a threshold of a power headroom in accordance with a power class supported by UE 200, and determine whether to perform the support report/request based on whether the RSRP/power headroom is higher than or lower than the threshold.

### (Option 5)

UE 200 may configure/determine a threshold of a reception level such as RSRP or a threshold of a power headroom in accordance with a PCmax value at a timing of determining whether to perform the support report/request, and determine whether to perform the support report/request based on whether the RSRP/power headroom is higher than or lower than the threshold. Note that the PCmax value is a basis for determination whether high-power UL transmission is possible.

### (Option 6)

UE 200 may determine whether to perform the support report/request based on whether a power headroom for a target UL channel is higher than or lower than a threshold. Note that the threshold may be determined by the same method as in the above Option 1.

Note that the above options may be applied in combination.

### <Effect of Suggestion 3>

As described above, UE 200 performs the support report/request of repetition for a plurality of channels in one support report/request, which makes it possible to reduce the number of times of capability signaling or the payload size as compared with a case of performing the support report/request for each channel, thereby reducing the overhead.

### <Variation>

The channel in which the support report/request is performed may be configured depending on the type of UE 200. In addition, in a case where UE 200 has already reported the type to gNB 100, the support report/request may be performed in a channel corresponding to the type, and in a case where UE 200 has not yet reported the type to gNB 100, the support report/request may be performed in a specific channel.

### (Apparatus Configuration)

Next, a description will be given of a functional configuration example of gNB 100 and UE 200 that perform the processing and the operations described so far. gNB 100 and UE 200 have functions of performing the above-described embodiment. Note that gNB 100 and UE 200 may each have only some of the functions in the embodiment.

### <gNB 100>

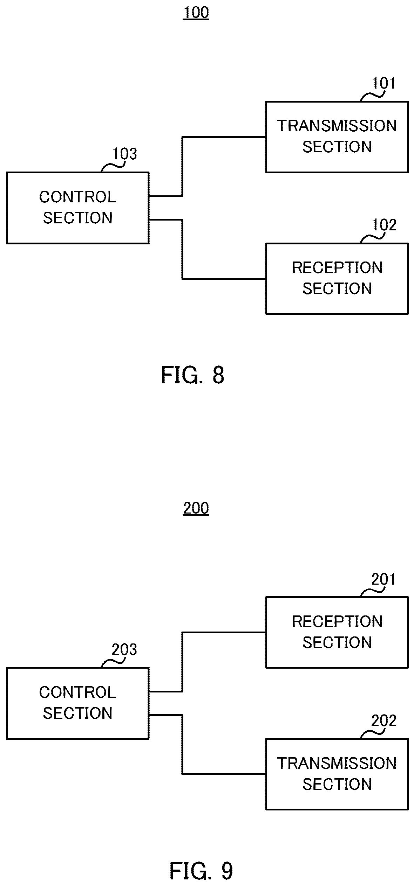

FIG. 8 is a diagram illustrating an example of a functional configuration of gNB 100. As illustrated in FIG. 8, gNB 100 includes reception section 101, transmission section 102, and control section 103. The functional configuration illustrated in FIG. 8 is merely an example. As long as the operations according to the embodiment of the present invention can be performed, any functional division and any name of the functional section may be applied.

Reception section 101 has a function of receiving various signals transmitted from UE 200 and acquiring, for example, information on a higher layer from the received signals. Transmission section 102 has a function of generating a signal to be transmitted to UE 200 and transmitting the signal by wire or radio.

Control section 103 stores configuration information configured in advance and various types of configuration information to be transmitted to UE 200 in a storage apparatus and reads out the configuration information from the storage apparatus as necessary. In addition, control section 103 executes processing related to communication with UE 200. A functional section related to signal transmission in control section 103 may be included in transmission section 102, and a functional section related to signal reception in control section 103 may be included in reception section 101.

### <UE 200>

FIG. 9 is a diagram illustrating an example of a functional configuration of UE 200. As illustrated in FIG. 9, UE 200 includes transmission section 201, reception section 202, and control section 203. The functional configuration illustrated in FIG. 9 is merely an example. As long as the operations according to the embodiment of the present invention can be performed, any functional division and any name of the functional section may be applied.

Transmission section 201 creates a transmission signal from transmission data and transmits the transmission signal by radio. Reception section 202 receives various signals by radio and acquires a signal of a higher layer from the received signal of a physical layer. In addition, reception section 202 has a function of receiving an NR-PSS, an NR-SSS, an NR-PBCH, a DL/UL control signal, a reference signal, or the like transmitted from gNB 100.

Control section 203 stores various types of configuration information received from gNB 100 by reception section 202 in a storage apparatus and reads out the configuration information from the storage apparatus as necessary. In addition, control section 203 executes processing related to communication with gNB 100. A functional section related to signal transmission in control section 203 may be included in transmission section 201, and a functional section related to signal reception in control section 203 may be included in reception section 202.

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

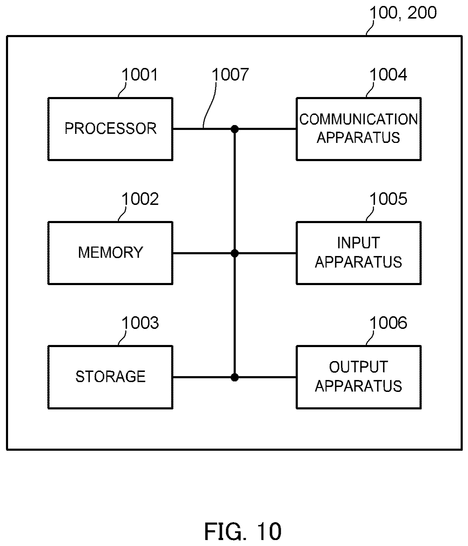

For example, a base station, a terminal, and so on according to one embodiment of the present disclosure may function as a computer that executes the processes of the radio communication method of the present disclosure. FIG. 10 is a diagram to show an example of a hardware structure of a base station and a terminal according to an embodiment of the present disclosure. Physically, the above-described base station 100 and terminal 200 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100 and terminal 200 may be configured to include one or more of apparatuses illustrated in the drawings, or may be configured not to include part of apparatuses.

Each function of base station 100 and terminal 200 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, control section 303, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, base station 100 and terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, transmission section 202, transmission section 302, reception section 102, reception section 201, reception section 301 and the like may be realized by communication apparatus 1004. Communication apparatus 1004 may be implemented physically or logically separated into a transmission section and a reception section.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100 and terminal 200 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, processor 1001 may be implemented with at least one of these pieces of hardware.

### (Supplement to Embodiment)

While the embodiment of the present disclosure has been described above, the disclosed invention is not limited to such an embodiment, and a person skilled in the art would understand various variations, modifications, alternatives, substitutions, and the like. Specific numerical examples have been used in the description to facilitate understanding of the invention, but unless otherwise noted, these numbers are merely examples and any suitable values may be used. The division of the items in the above description is not essential to the present disclosure, and matters described in two or more items may be combined and used as necessary, and matters described in one item may be applied to matters described in another item (as long as they do not contradict each other). The boundaries of the functional sections and processing sections in the functional block diagram do not necessarily correspond to the boundaries of physical components. The operations of a plurality of functional sections may be performed physically by one component, or the operation of one functional section may be performed physically by a plurality of components. The processing procedures described in the embodiment may be performed in a different order as long as there is no contradiction. For convenience of description of the processing, base station 100 and terminal 200 have been described using functional block diagrams, but such apparatuses may be implemented in hardware, software, or a combination thereof. Software that operates on a processor included in base station 100 according to an embodiment of the present disclosure and software that operates on a processor included in terminal 200 according to an embodiment of the present disclosure may each be stored in any suitable storage medium, such as a random access memory (RAM), a flash memory, a read-only memory (ROM), an erasable programmable read-only memory (EPROM), an electrically erasable programmable read-only memory (EEPROM), a register, a hard disk (HDD), a removable disk, a CD-ROM, a database, a server, or the like.

### <Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmission of information by a base station to a terminal may be replaced with an indication of control or an operation based on the information by the base station to the terminal.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminal 200 may have the functions of base station 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 100 may have the functions of terminal 200 described above.

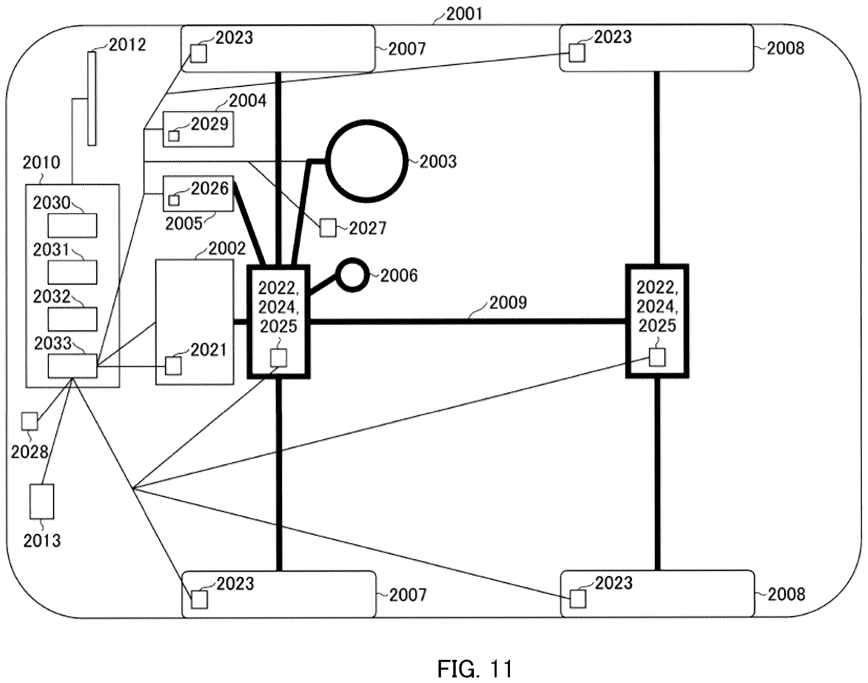

FIG. 11 illustrates an example of a configuration of vehicle 2001. As illustrated in FIG. 11, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 2029 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)). In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

### <Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of') as used in the present disclosure does not mean "based only on" (or "only on the basis of"), unless otherwise specified. In other words, the phrase "based on" (or "on the basis of') means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Reference Signs List

10 Radio communication system
100 Base station (gNB)
200 Terminal (UE)

## Claims

1. A terminal comprising:
a control section that generates support report information for reporting that the terminal supports a plurality of functions related to coverage enhancement or request information for requesting the functions; and
a transmission section that transmits the support report information or the request information via one channel.

2. The terminal according to claim 1, wherein,
the functions related to the coverage enhancement are functions related to repetition,
the control section generates support report information for reporting that the terminal supports the functions related to repetition or request information for requesting the functions; and
the transmission section transmits the support report information or the request information via one channel.

3. The terminal according to claim 2, wherein the control section determines whether to transmit the support report information or the request information based on a magnitude relationship between a level of a received signal and a threshold.

4. The terminal according to claim 2, wherein the control section determines whether to transmit the support report information or the request information depending on whether the terminal supports each of the functions.

5. A radio communication method comprising:
generating, by a terminal, support report information for reporting that the terminal supports a plurality of functions related to coverage enhancement or request information for requesting the functions; and
transmitting, by the terminal, the support report information or the request information via one channel.
